# EUROPÄISCHE PATENTANMELDUNG

(11) **EP 3 104 242 A1**
(43) Veröffentlichungstag der Anmeldung: **14.12.2016**
(21) Anmeldenummer: 15171936.6
(22) Anmeldetag: 12.06.2015
(51) Int. Cl.: G05B 23/02, G06F 11/00, G06F 11/22

(54) **LEITSYSTEM UND VERFAHREN ZUR EVALUIERUNG DER KOMMUNIKATION IN EINEM TECHNISCHEN PROZESS**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren und ein Leitsystem für einen technischen Prozess, umfassend ein Bedien- und Beobachtungssystem und eine Automatisierungsstation (2), wobei reale Prozesswerte von der zumindest einen Automatisierungsstation (2) an das Bedien- und Beobachtungssystem übertragbar sind, wobei ein in der einen Automatisierungsstation (2) integrierter Patterngenerator (8) vorgesehen ist, der bei Bedarf anstelle der realen Prozesswerte dedizierte Signalpattern generiert, auf Basis derer die Güte der Kommunikation evaluierbar ist.

## Beschreibung

Die Erfindung betrifft ein Leitsystem für einen technischen Prozess, umfassend ein Bedien- und Beobachtungssystem und zumindest eine Automatisierungsstation, und wobei reale Prozesswerte von der zumindest einen Automatisierungsstation an das Bedien- und Beobachtungssystem übertragbar sind sowie ein Verfahren.

Eine Vielzahl von Automatisierungsstationen können mit unterschiedlichsten Automatisierungsaufgaben projektiert und der automatisierte Prozess durch OS-Clients visualisiert werden, wobei die Prozessdaten zur Visualisierung aus unterschiedlichsten OS-Servern stammen können. Diese Prozesse werden von Automatisierungsstationen und Operatorstationen übertragen.

Unter einer Automatisierungsstation wird die Rechenstation verstanden, die für die automatische Steuerung der Prozesse verantwortlich ist. Das eine Automatisierungssystem oder die mehreren Automatisierungssysteme hat bzw. haben dabei die Funktion eines Controllers für die jeweils daran angeschlossenen Prozessperipheriegeräte und ist bzw. sind üblicherweise über einen Kommunikationsbus, z.B. einen Industrial Ethernet-Bus, kommunikativ mit einem Bedien- und Beobachtungssystem verbunden.

Das Bedien- und Beobachtungssystem ermöglicht eine Führung des Prozesses durch Bedienpersonal. Das Bedienpersonal kann den Prozessablauf über verschiedene Sichten beobachten und bei Bedarf steuernd eingreifen. Das Bedien- und Beobachtungssystem kann hierzu ein oder mehrere Bedien- und Beobachtungsplätze (häufig auch als "Operator Station" bezeichnet) umfassen, die als OS-Clients ausgebildet sind und über einen Terminalbus kommunikativ mit einem OS-Server verbunden sind. Dabei ist der OS-Server zudem mit der Automatisierungsstation verbunden.

Der technische Prozess kann beispielsweise ein Prozess zur Herstellung von Chemikalien, Nahrungs- und Genussmitteln, Pharmazieprodukten oder Produkten der Petrochemie sein, der in einer entsprechenden Einrichtung (z.B. Anlage) abläuft. Es kann sich aber beispielsweise auch um einen Prozess zur Wasserbehandlung oder einen Kraftwerksprozess handeln.

Heutige Leitsysteme verwenden feste Kommunikationsparadigmen für die Übertragung von Prozesswerten (z.B. Drücke, Gewichte, Temperaturen, Füllstandshöhen) von einer Automatisierungsstation zum Bedien- und Beobachtungsystem. So können z.B. Prozesswerte in Form von Prozessdaten ausschließlich zyklisch übertragen bzw. abgefragt ("Polling"-Verfahren) werden.

Bei Leitsystemen für Kraftwerke werden ereignisorientierte Übertragungsverfahren angewandt, die häufig auch als "EDC" (Event Driven Communication) bezeichnet werden. Beim EDC werden Prozesswerte von der Automatisierungsstation an das Bedien- und Beobachtungssystem erst dann übertragen, wenn sie sich seit der letzten Übertragung geändert haben.

Eine Vielzahl von Automatisierungsstationen können mit unterschiedlichsten Automatisierungsaufgaben projektiert und der automatisierte Prozess durch OS-Clients visualisiert werden, wobei die Prozessdaten zur Visualisierung aus unterschiedlichsten OS-Servern stammen können. Eine Voraussetzung für das sichere Bedienen und Beobachten einer Anlage ist die korrekte Erfassung und Übertragung von Prozesswerten von den Automatisierungsstationen durch die OS-Server in die OS-Clients.

Die korrekte Erfassung und Übertragung von Prozesswerten kann durch unterschiedlichste Faktoren gestört, bzw. beeinflusst werden. Ein Auszug möglicher Problemfaktoren sind z.B. die Überlastung einer Automatisierungsstation, die Überlastung und/oder die Störung eines OS-Servers. Weitere Möglichkeiten sind die Überlastung oder Störung eines OS-Clients sowie die schlechten Kommunikationswege (Ethernet), z.B. durch hohe Verzögerungen oder niedrige Datenraten.

In Kenntnis darüber, dass ein Problem bei der Übertragung vorliegt, können auch entsprechende Gegenmaßnahmen vorgenommen werden, wie z.B. die Entlastung der Automatisierungsstationen durch bessere Verteilung der Automatisierungssoftware auf andere, weniger ausgelastete Automatisierungsstationen oder die Verringerung des Prozessabbildes eines OS-Servers durch Verteilung des Prozessabbildes auf andere, weniger ausgelastete OS-Server oder die Verbesserung der Kommunikationsinfrastruktur.

Die bisher ungelöste Herausforderung an der Stelle ist, Probleme der Übertragung bei der Inbetriebnahme, bzw. im laufenden Betrieb, einer Anlage zu erkennen und vor allem auch lokalisieren zu können.

Ausgehend hiervon ist es eine erste Aufgabe der vorliegenden Erfindung, ein Leitsystem für einen technischen Prozess, welches das oben genannte Problem löst, anzugeben. Eine zweite Aufgabe liegt in der Angabe eines Verfahrens, welches sich insbesondere dazu eignet, auf dem erfindungsgemäßen Leitsystem durchgeführt zu werden.

Die erste Aufgabe wird gelöst durch die Angabe eines Leitsystems für einen technischen Prozess, umfassend ein Bedien- und Beobachtungssystem und zumindest eine Automatisierungsstation, wobei reale Prozesswerte von der zumindest einen Automatisierungsstation an das Bedien- und Beobachtungssystem übertragbar sind, und wobei zumindest ein in der Automatisierungsstation integrierter Patterngenerator vorgesehen ist, der bei Bedarf anstelle der realen Prozesswerte dedizierte Signalpattern generiert, auf Basis derer die Güte der Kommunikation evaluierbar ist.

Die zweite Aufgabe wird gelöst durch ein Verfahren zum Betrieb eines Leitsystem für einen technischen Prozess mit einem Bedien- und Beobachtungssystem und zumindest einer Automatisierungsstation, wobei reale Prozesswerte von der zumindest einen Automatisierungsstation an das Bedien- und Beobachtungssystem übertragbar sind, wobei durch zumindest einen in der Automatisierungsstation integrierten Patterngenerator bei Bedarf anstelle der realen Prozesswerte dedizierte Signalpattern generiert werden, auf Basis derer die Güte der Kommunikation evaluiert wird.

Erfindungsgemäß wird ein Patterngenerator der in der Automatisierungsstation, insbesondere in jedem Funktionsbaustein der Automatisierungsstation, integriert, der bei Bedarf anstelle der realen Prozesswerte der Peripherie dedizierte Signalpattern generiert, auf Basis derer die Güte der Kommunikation in überlagerten Leitsystemkomponenten evaluiert werden kann. Dies hat ein robusteres Leitsystem zur Folge, da potentielle Kommunikationsprobleme konkret bei der Inbetriebnahme oder im realen Anlagenbetrieb gefunden und in Folge dessen auch gelöst werden können. Zudem bietet sich die Möglichkeit zur genauen Lokalisierung der Ursache eines Kommunikationsproblems.

Ein weiterer Vorteil liegt in der Verbesserung der Verfügbarkeit und der Zuverlässigkeit eines Leitsystems im Kontext von kommunikations-relevanten Problemen. Die Probleme im Stand der Technik werden so erfindungsgemäß überwunden.

In den Unteransprüchen sind weitere vorteilhafte Maßnahmen aufgelistet, die beliebig miteinander kombiniert werden können, um weitere Vorteile zu erzielen.

In einer bevorzugten Ausgestaltung weist das Bedien- und Beobachtungssystem einen OS-Server auf, wobei im OS-Server ein erster Patternverifikator vorgesehen ist, der das empfangene Signalpattern des zumindest einen Patterngenerators verifiziert. Zudem weist vorteilhafterweise der OS-Server eine OS-Server Domain Logic auf. Der erste Patternverifikator ist in dieser OS-Server Domain Logic enthalten. Auch kann in dem Bedien- und Beobachtungssystem ein Prozessabbild mit den Prozesswerten des Prozesses gespeichert sein und ein Zugriff des ersten Patternverifikator über die OS-Server Domain Logic auf die Prozesswerte erfolgen.

Es ist damit ein erster Patternverifikator im OS-Server vorgesehen, der das empfangene Signalpattern des Patterngenerators des/der Funktionsbaustein-s/e verifiziert und z.B. auf Datenlücken oder Zeitversätze untersucht. Der erste Patternverifikator im OS-Server existiert einmal, operiert auf Basis des Prozessabbildes und ist in der OS-Server Domain Logic enthalten. Die Domain Logic verarbeitet die HMI-relevanten Tags im Prozessabbild und bildet diese in dem Block-Icon, bzw. in dem Faceplate für das Bedienen und Beobachten ab. Die Domain Logic ist quasi für die Dynamisierung des Block-Icons und des Faceplates auf Basis von Prozesswertänderungen zuständig. Für alle Prozessobjekte auf einem OS-Server existiert bevorzugt nur eine Domain Logic. Der erste Patternverifikator ist dabei in der Domain Logic im Visualisierungsdienst für die Anlagenbilder in der Operation Station vorgesehen. Der erste Patternverifikator nutzt hierbei über die Domain Logic die Data Source des Visualisierungsdienstes, um auf das Prozessabbild - also die Prozesswerte - in der Laufzeitumgebung zugreifen zu können. Wird bereits hier ein Kommunikationsproblem mit der Automatisierungsstation erkannt, wird dies festgehalten.

In bevorzugter Ausgestaltung weist das Bedien- und Beobachtungssystem einen OS-Client auf, wobei im OS-Client ein zweiter Patternverifikator vorgesehen ist, der das empfangene Signalpattern des zumindest einen Patterngenerators verifiziert. D.h. der zweite Patternverifikator ist im OS-Client, z.B. in den Block-Icons bzw. Faceplates, integriert um dort die empfangenen Signalpattern des Patterngenerators zu verifizieren. Eine Verifikation der Kommunikation kann somit in jedem Client direkt stattfinden. Tritt auf dem Weg der Signalpattern von der Automatisierungsstation durch z.B. den OS-Server bis in den OS-Client ein Kommunikationsproblem auf, kann die Stelle an dem das Problem aufgetreten ist, lokalisiert und im OS-Client auch entsprechend zur Anzeige gebracht werden.

Bevorzugt ist durch den zweiten Patternverifikator im OS-Client ein Kommunikationstest anstoßbar, anhand derer die Kommunikation während der Inbetriebnahme und/oder während des laufenden Betriebs testbar ist. Kommunikationstest anstoßen bedeutet beispielsweise, dass das Faceplate einem Funktionsbaustein in der Steuerung, z.B. einem Funktionsbaustein in der Automatisierungsstation mitteilt, für einen definierten Zeitraum anstelle der realen Prozesswerte Signalpattern zu übermitteln, anhand derer die Kommunikation während der Inbetriebnahme und/oder während des laufenden Betriebs getestet werden kann.

In einer besonderen Ausgestaltung der Erfindung weist der Prozesswert einen Begleitwert auf und der Patterngenerator modifiziert diesen Begleitwert. Um zwischen realen Prozesswerten und Signalpattern unterscheiden zu können, wird z.B. der so genannte "Quality Code" (Byte) des jeweiligen Prozesswertes um ein Flag ergänzt (z.B. Bit 8), das gesetzt wird, falls es sich bei dem übertragenen Signal um ein Signalpattern für die Kommunikationsverifikation handelt. Wird bereits hier ein Kommunikationsproblem mit der Automatisierungsstation erkannt, wird dies im Begleitwert des Prozesswertes festgehalten durch z.B. Bit 7, wenn z.B. Bit 8 bereits für die Kennzeichnung als Signalpattern vergeben ist.

Bevorzugt weist die Automatisierungsstation zumindest einen Funktionsbaustein auf. Der Patterngenerator ist dabei in dem Funktionsbaustein vorgesehen. Auch kann die Automatisierungsstation mehrere Funktionsbausteine aufweisen und der Patterngenerator in jedem Funktionsbaustein vorgesehen sein.

Bevorzugt weist die technische Anlage ein Prozessobjekt auf, welches mit der Automatisierungsstation verbunden ist. Zudem weist der OS-Server zur Integration der HMI-relevanten Tags im Prozessabbild eine Datenstruktur (strukturierter Tag) auf.

Bevorzugt ist die Automatisierungsstation dazu eingerichtet Continious Function Chart zu verwenden, wobei der Patterngenerator über Continious Function Chart (CFC) aufrufbar ist. Continious Function Chart (CFC) ist eine Programmiersprache für speicherprogrammierbare Steuerungen. Solche CFC-Einheiten sind in den Automatisierungsstationen bereits vorhanden. Durch die CFC kann der Benutzer den Patterngenerator im Funktionsbaustein der Automatisierungsstation aufrufen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: ein Beispiel für ein Leitsystem für einen technischen Prozess,
- FIG 2: ein ULM-Objektmodell eines Prozessobjektes mit der erfindungsgemäßen Kommunikationsverifikation, und
- FIG 3: die Integration des Patterngenerators und der Patternverfikatoren in die Architektur des Leitsystems.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

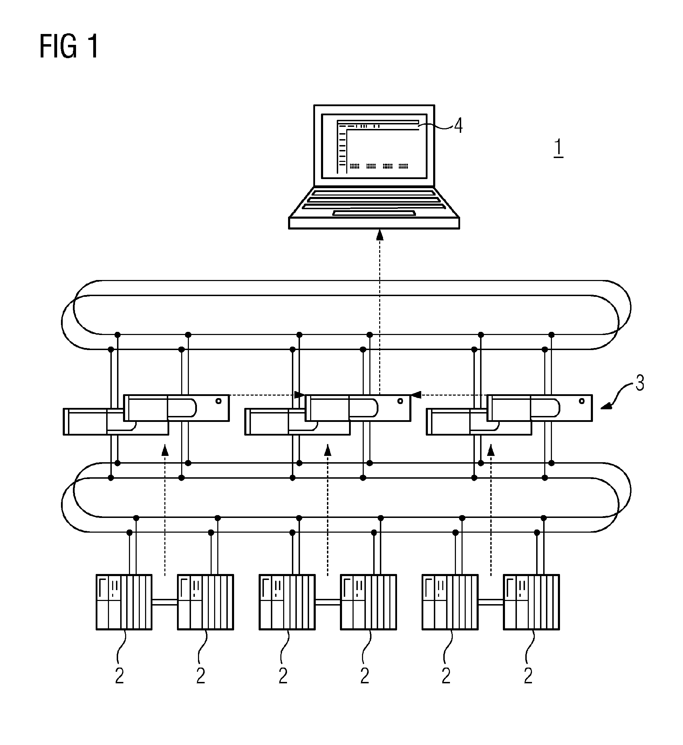

Gemäß FIG 1 umfasst ein Leitsystem 1 für einen technischen Prozess ein Bedien- und Beobachtungssystem und mehrere Automatisierungsstationen 2. Die Automatisierungsstationen 2 weisen ein oder mehrere als Software formulierte Funktionsbausteine (nicht gezeigt) auf. An die Automatisierungsstationen 2 sind über weitere geeignete Busverbindungen Ein-/ Ausgabeperipheriegeräte angeschlossen, an die wiederum Aktoren und/oder Sensoren oder andere Geräte angeschlossen sind. Mittels der Ein-/ Ausgabeperipheriegeräte und der damit verbunden Geräte werden von den Automatisierungsstationen 2 Prozesswerte von Prozessvariablen erfasst. Diese Prozesswerte werden an das Bedien- und Beobachtungssystem weitergeleitet. Dabei umfasst das Bedien- und Beobachtungssystem verschiedene OS-Server 3 und eine z.B. über einen Bus/Netz etc. verbundene Operation Station, die als OS-Client 4 ausgebildet ist. D.h. der OS-Client 4 wird mit Prozesswerten verschiedener Automatisierungsstationen 2 durch mehrere OS-Server 3 versorgt. Eine Voraussetzung für das sichere Bedienen und Beobachten einer Anlage ist die korrekte Erfassung und Übertragung von Prozesswerten von den Automatisierungsstationen 2 durch die OS-Server 3 in den OS-Client 4.

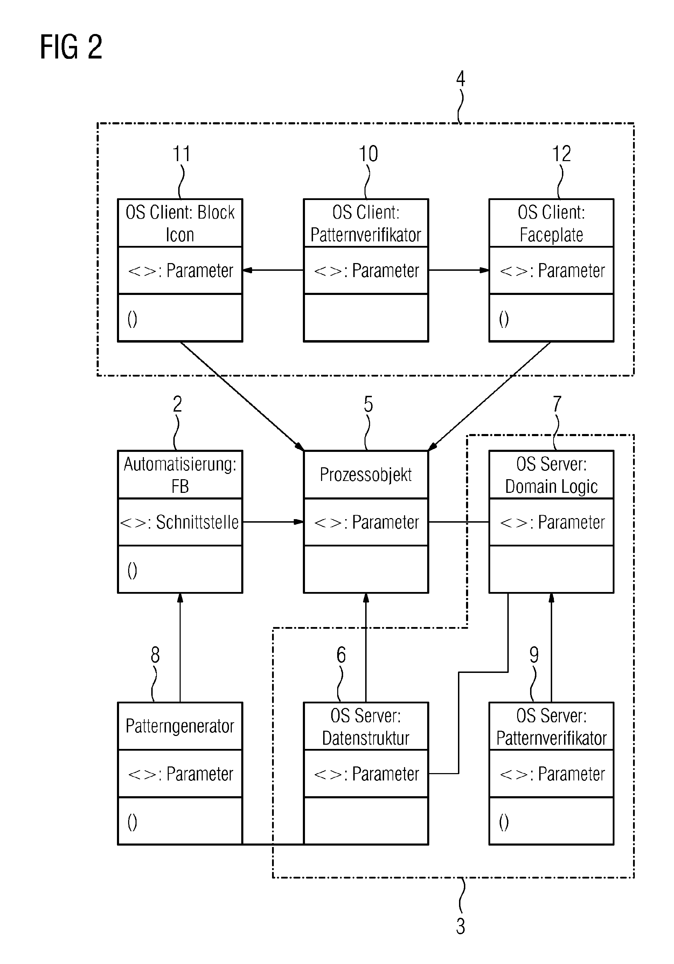

FIG 2 zeigt ein schematisch vereinfachtes ULM-Objektmodell eines Prozessobjektes 5 mit der erfindungsgemäßen Kommunikationsverifikation. Zur Erkennung und Lokalisierung von Übertragungsproblemen in einem komplexen, hierarchischen und verteilten Leitsystem 1 wird das in der Leitsystem 1 verwendete Prozessobjekt 5 um weitere Komponenten ergänzt.

Das ULM-Objektmodell umfasst eine Automatisierungsstation 2, die in der Regel einen Funktionsbaustein für die Automatisierung enthält. Zudem wird ein OS-Server 3 mit einem Datenstrukturbaustein 6, der die Datenstruktur (strukturierter Tag) für den OS-Server 3 zur Integration der HMI-relevanten Tags im Prozessabbild des OS-Clients 4 - abgeleitet auf dem Funktionsbaustein der Automatisierungsstation 2- und ergänzt um temporäre Variablen, umfasst. Zudem beinhaltet der OS-Server 3 eine OS-Server Domain Logic 7 auf dem OS-Server 2, die die HMI-relevanten Tags im Prozessabbild des OS-Clients 4 verarbeitet und für das Bedienen und Beobachten in Block-Icons 11, bzw. auf den Faceplates 12 abbildet. Die OS-Server Domain Logic 7 ist quasi für die Dynamisierung der Block-Icons 11 und Faceplates 12 auf Basis von Prozesswertänderungen zuständig. Für alle Prozessobjekte 5 auf einem OS-Server 3 existiert nur eine OS-Server Domain Logic 7.

Erfindungsgemäß ist in der Automatisierungsstation 2 nun ein Patterngenerator 8 vorgesehen, der in jedem Funktionsbaustein der Automatisierung integriert wird und bei Bedarf anstelle der realen Prozesswerte der Peripherie dedizierte Signalpattern generiert, auf Basis derer die Güte der Kommunikation in überlagerten Leitsystemkomponenten evaluiert werden kann.

Ein erster Patternverifikator 9 ist zudem im OS-Server 3 vorgesehen, der die empfangenen Signalpattern der Patterngeneratoren 8 der Funktionsbausteine verifiziert und z.B. auf Datenlücken oder Zeitversätze untersucht.

Um zwischen realen Prozesswerten und Signalpattern unterscheiden zu können, wird der so genannte "Quality Code" (Byte) des jeweiligen Prozesswertes um ein Flag ergänzt (z.B. Bit 8), das durch die Automatisierungsstation 2 gesetzt wird, falls es sich bei dem übertragenen Signal um ein Signalpattern für die Kommunikationsverifikation handelt. Der Patternverifikator 9 im OS-Server 3 existiert einmal, operiert auf Basis des Prozessabbildes und ist in der OS-Server Domain Logic 7 enthalten.

Zudem sind ein OS-Client Block-Icon 11 und ein OS-Client Faceplate 12 für das Bedienen und Beobachten über Anlagenbilder in dem OS-Client 4 vorgesehen.

Ein zweiter Patternverifikator 10 ist im OS-Client 4 integriert, der z.B. auf dem OS-Client Block-Icon 11 abgebildet ist bzw. im OS-Client Faceplate 12 integriert ist und dort die empfangenen Signalpattern der Patterngeneratoren 8 der Funktionsbausteine verifiziert.

Eine Verifikation der Kommunikation kann somit in jedem OS-Client 4 direkt stattfinden. Tritt auf dem Weg des Signalpatterns von der Automatisierungsstationen 2 durch den OS-Server 3 bis in den OS-Client 4 ein Kommunikationsproblem auf, kann die Stelle an dem das Problem aufgetreten ist lokalisiert und im OS-Client 4 auch entsprechend zur Anzeige gebracht werden. Der zweite Patternverifikator 10 im OS-Client 4 ist darüber hinaus auch in der Lage, einen Kommunikationstest anzustoßen. Dies ist z.B. durch eine zusätzliche Funktion im OS-Client Faceplate 12 möglich. Kommunikationstest anstoßen bedeutet, dass das OS-Client Faceplate 12 dem Funktionsbaustein in der Steuerung mitteilt, für einen definierten Zeitraum anstelle der realen Prozesswerte Signalpattern zu übermitteln, anhand derer die Kommunikation während der Inbetriebnahme / während des laufenden Betriebs getestet werden kann. Auch kann ein Kommunikationsproblem über das OS-Client Faceplate 12 z.B. signalisiert werden.

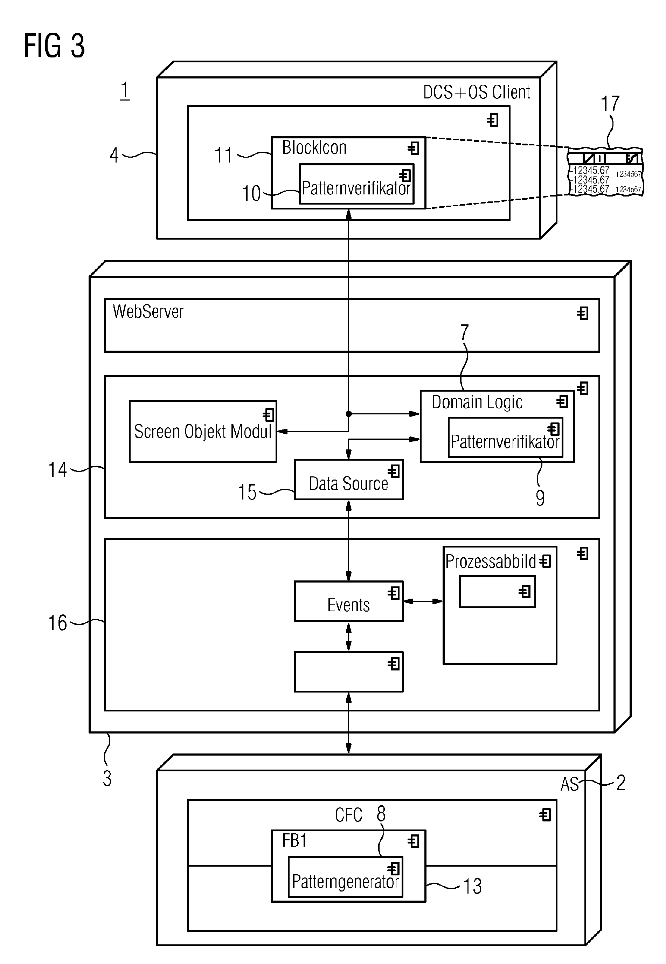

FIG 3 zeigt den Patterngenerator 8 und den ersten 9 und den zweiten 10 Patternverifikator in der Architektur des Leitsystems 1. In der Automatisierungsstation 2 ist in einem ersten Funktionsbaustein 13 ein Patterngenerator 8 vorgesehen, welcher beispielsweise durch einen CFC aufgerufen wird. Continuous Function Chart (CFC) ist eine Programmiersprache für Speicherprogrammierbare Steuerung SPS. Das Signalpattern wird generiert und an einen OS-Server 3 übertragen. Der OS-Server 3 weist einen ersten OS-Patternverifikator 8 auf.

Der erste Patternverifikator 8 ist in der OS-Server Domain Logic 7 im Visualisierungsdienst 14 für die Anlagenbilder im OS-Client 4 vorgesehen. Der erste Patternverifikator 8 nutzt hierbei über die Domain Logic 7 die Data Source 15 des Visualisierungsdienstes 14, um auf das Prozessabbild - also die Prozesswerte - in der Laufzeitumgebung zugreifen zu können. Wird bereits hier ein Kommunikationsproblem mit der Automatisierungsstation 2 erkannt, wird dies im Begleitwert des Prozesswertes festgehalten. Das Signalpattern wird sozusagen im Prozessbild hinterlegt und vor dem Übertragen serverseitig verifiziert. Im OS-Client 4 sind im Anlagenbild die/der erweiterten OS-Clients Block-Icons 11 mit einem Symbol 17 zur Signalisierung eines Kommunikationsproblems, wenn dieses durch den zweiten Patternverifikator 8 in der OS-Client Domain Logic 7 oder im OS-Client Block-Icon 11 selbst erkannt wurde, enthalten.

Wurde das Kommunikationsproblem bereits vom ersten Patternverifikator 8 serverseitig in der OS-Client Domain Logic 7 erkannt, so kann dies im OS-Clients Block-Icon 11, bzw. im OS-Clients Faceplate 12, am entsprechend gesetzten Bit im Quality Code erkannt werden.

Durch die Visualisierung im Symbol 17 kann die Lokalisierung des Kommunikationsproblems unmittelbar dargestellt werden. In FIG 3 kann aus dem Block-Icon 11 abgeleitet werden, dass in der Kommunikation zwischen Automatisierungsstation 2 und OS-Client 4 ein Problem aufgetreten ist. Für das Bedienen referenziert das Block-Icon 11 ein Faceplate 12, welches ebenfalls über ein Statussymbol zur Darstellung eines Kommunikationsproblems verfügt. Darüber hinaus kann durch das Faceplate 12 der Kommunikationstest auch angestoßen werden, indem in einem dazugehörigen ersten Funktionsbaustein 13 der Automatisierungsstation 2 ein Flag zur Durchführung des Kommunikationstests gesetzt wird. Darauffolgend generiert der erste Funktionsbaustein 13 ein zeitlich begrenztes Signalpattern, welches für die Kommunikationsanalyse genutzt wird. Um das Pattern auch als solches identifizieren zu können, setzt der erste Funktionsbaustein 13 zusätzlich im Begleitwert ein entsprechendes Bit.

## Patentansprüche

1. Leitsystem für einen technischen Prozess, umfassend ein Bedien- und Beobachtungssystem und zumindest eine Automatisierungsstation (2), wobei reale Prozesswerte von der zumindest einen Automatisierungsstation (2) an das Bedien- und Beobachtungssystem übertragbar sind,
**dadurch gekennzeichnet, dass** zumindest ein in der zumindest einen Automatisierungsstation (2) integrierter Patterngenerator (8) vorgesehen ist, der bei Bedarf anstelle der realen Prozesswerte dedizierte Signalpattern generiert, auf Basis derer die Güte der Kommunikation evaluierbar ist.

2. Leitsystem (1) nach Anspruch 1,
**dadurch gekennzeichnet, dass** das Bedien- und Beobachtungssystem einen OS-Server (3) aufweist und im OS-Server (3) ein erster Patternverifikator (9) vorgesehen ist, der die empfangenen Signalpattern des Patterngenerators (8) verifiziert.

3. Leitsystem (1) nach Anspruch 2,
**dadurch gekennzeichnet, dass** der OS-Server (3) eine OS-Server Domain Logic (7) aufweist und der erste Patternverifikator (9) in der OS-Server Domain Logic (7) enthalten ist.

4. Leitsystem (1) nach Anspruch 3,
**dadurch gekennzeichnet, dass** in dem Bedien- und Beobachtungssystem ein Prozessabbild mit den Prozesswerten des Prozesses gespeichert ist und ein Zugriff des ersten Patternverifikator (9) über die OS-Server Domain Logic (7) auf die Prozesswerte erfolgt.

5. Leitsystem (1) nach einem der vorhergehenden Ansprüche,
**dadurch gekennzeichnet, dass** das Bedien- und Beobachtungssystem einen OS-Client (4) aufweist und im OS-Client (4) ein zweiter Patternverifikator (10) vorgesehen ist, der die empfangenen Signalpattern des Patterngenerators (8) verifiziert.

6. Leitsystem (1) nach Anspruch 5,
**dadurch gekennzeichnet, dass** durch den zweiten Patternverifikator (10) im OS-Client (4) ein Kommunikationstest anstoßbar ist, anhand derer die Kommunikation während der Inbetriebnahme und/oder während des laufenden Betriebs testbar ist.

7. Leitsystem (1) nach einem der vorhergehenden Ansprüche,
**dadurch gekennzeichnet, dass** der Prozesswert einen Begleitwert aufweist und der zumindest eine Patterngenerator (8) diesen Begleitwert modifiziert.

8. Leitsystem (1) nach einem der vorhergehenden Ansprüche,
**dadurch gekennzeichnet, dass** die Automatisierungsstation (2) zumindest einen Funktionsbaustein (13) aufweist und der Patterngenerator (8) in dem Funktionsbaustein (13) vorgesehen ist.

9. Leitsystem (1) nach einem der vorhergehenden Ansprüche,
**dadurch gekennzeichnet, dass** die Automatisierungsstation (2) mehrere Funktionsbausteine aufweist und der Patterngenerator (8) in jedem Funktionsbaustein vorgesehen ist.

10. Leitsystem (1) nach einem der vorhergehenden Ansprüche,
**dadurch gekennzeichnet, dass** die technische Anlage ein Prozessobjekt aufweist, welche mit der Automatisierungsstation (2) verbunden ist.

11. Leitsystem (1) nach einem der vorhergehenden Ansprüche,
**dadurch gekennzeichnet, dass** die Automatisierungsstation (2) eingerichtet ist Continious Function Chart zu verwenden und der Patterngenerator (8) über Continious Function Chart aufrufbar ist.

12. Verfahren zum Betrieb eines Leitsystems (1) für einen technischen Prozess mit einem Bedien- und Beobachtungssystem und zumindest einer Automatisierungsstation (2), wobei reale Prozesswerte von der zumindest einen Automatisierungsstation (2) an das Bedien- und Beobachtungssystem übertragbar sind,
**dadurch gekennzeichnet, dass** durch zumindest einen in der zumindest einen Automatisierungsstation (2) integrierten Patterngenerator (8) bei Bedarf anstelle der realen Prozesswerte dedizierte Signalpattern generiert werden, auf Basis derer die Güte der Kommunikation evaluiert wird.

13. Verfahren zum Betrieb eines Leitsystems (1) nach Anspruch 12, **dadurch gekennzeichnet, dass** durch einen ersten Patternverifikator (9) in einem OS-Server (3) des Bedien- und Beobachtungssystems die empfangenen Signalpattern des Patterngenerators (8) verifiziert werden.

14. Verfahren zum Betrieb eines Leitsystems (1) nach Anspruch 13, **dadurch gekennzeichnet, dass** in dem Bedien- und Beobachtungssystem ein Prozessabbild mit den Prozesswerten des Prozesses gespeichert ist und der erste Patternverifikator (9) in dem OS-Server (3) auf die Prozesswerte zugreift.

15. Verfahren zum Betrieb eines Leitsystems (1) nach einem der Ansprüche 12 bis 14,
**dadurch gekennzeichnet, dass** durch einen zweiten Patternverifikator (10) in einem OS-Client (4) des Bedien- und Beobachtungssystems die empfangenen Signalpattern des zweiten Patterngenerators (10) verifiziert werden.

16. Verfahren zum Betrieb eines Leitsystems (1) nach Anspruch 15, **dadurch gekennzeichnet, dass** durch den zweiten Patternverifikator (10) im OS-Client (4) ein Kommunikationstest anstoßen wird, um so für einen definierten Zeitraum anstelle der realen Prozesswerte Signalpattern zu erzeugen und zu übermitteln, anhand derer die Kommunikation während der Inbetriebnahme und/oder während des laufenden Betriebs getestet wird.

17. Verfahren zum Betrieb eines Leitsystems (1) nach einem der Ansprüche 12 bis 16, welches in einem Leitsystem (1) nach einem der Ansprüche 1-11 durchgeführt wird.
